# EUROPÄISCHE PATENTSCHRIFT

(11) **EP 0 923 803 B1**
(45) Veröffentlichungstag und Bekanntmachung des Hinweises auf die Patenterteilung: **21.03.2001**
(21) Anmeldenummer: 97941853.0
(22) Anmeldetag: 29.08.1997
(51) Int. Cl.: H02K 9/24

(54) **VERFAHREN ZUM INERTISIEREN EINES GENERATORS IN EINEM KRAFTWERK**
PROCESS FOR RENDERING INERT A GENERATOR IN A POWER STATION
PROCEDE PERMETTANT DE RENDRE INERTE UN GENERATEUR DANS UNE CENTRALE

(30) Priorität: 13.09.1996 DE 19637420; 13.09.1996 DE 19637422
(43) Veröffentlichungstag der Anmeldung: 23.06.1999
(73) Patentinhaber: SIEMENS AKTIENGESELLSCHAFT, 80333 München (DE)
(72) Erfinder: REHM, Helmut, D-46119 Oberhausen (DE); LEHMANN, Christoph, D-47506 Neukirchen-Vluyn (DE); WELLER, Klaus, D-46562 Voerde (DE)
(86) Internationale Anmeldenummer: DE9701892
(87) Internationale Veröffentlichungsnummer: WO9811652

(56) Entgegenhaltungen:
- DE-A- 1 488 079
- PATENT ABSTRACTS OF JAPAN vol. 013, no. 338 (E-795), 28.Juli 1989 & JP 01 099452 A (HITACHI LTD;OTHERS: 01), 18.April 1989,
- PATENT ABSTRACTS OF JAPAN vol. 007, no. 080 (E-168), 2.April 1983 & JP 58 009548 A (TOKYO SHIBAURA DENKI KK), 19.Januar 1983,

## Beschreibung

Die Erfindung betrifft ein Verfahren zum Inertisieren eines stromerzeugenden Generators in einem Kraftwerk, insbesondere eines wasserstoffgekühlten Generators.

Generatoren werden üblicherweise ab einer bestimmten Leistungsklasse mit einem gasförmigen Kühlmittel im Betrieb gekühlt. Hierfür hat sich Wasserstoff (H₂) allgemein bewährt, da er gegenüber Luft eine geringere Dichte, eine bessere Wärmeleitfähigkeit und eine höhere spezifische Wärme aufweist. Darüber hinaus kann die Wärmekapazität von Wasserstoff durch Steigerung des Gasdruckes im Vergleich zu Luft erhöht werden, ohne daß Gasreibungsverluste im Generator unerwünscht hohe Werte erreichen. Daher wird der Gasdruck in der Regel auf einem Wert von 3 bis 6 bar gehalten. Der Wasserstoff wird innerhalb eines geschlossenen Kühlkreislaufes des Generators beispielsweise durch ein mehrstufiges Axialgebläse umgewälzt.

Für gelegentlich erforderliche Revisionsarbeiten am Generator oder bei Auftreten eines Störfalles ist ein Spülen bzw. Entleeren und anschließend ein erneutes Befüllen des Generators erforderlich. Zur Vermeidung von hochexplosiven Wasserstoff-Luft-Gemischen ist es bei diesen Austauschvorgängen zwingend vorgeschrieben (DIN VDE 0530, Teil 3), den Generator mit einem Zwischen- bzw. Inertgas zu spülen. Zu diesem Zweck wird in der Praxis bisher Kohlendioxid (CO₂) als Inertgas eingesetzt, wie den "Empfehlungen zur Verbesserung der H₂ - Sicherheit wasserstoffgekühlter Generatoren", 1. Auflage 1989, vom Arbeits-Ausschuß "Generatoren und Motoren" der Vereinigung Deutscher Elektrizitätswerke - VDEW, ebenso wie der eingangs genannten VDE-Norm, entnommen werden kann.

Die JP A 010 99 452 betrifft eine Wasserstoff-Abblasevorrichtung für einen Generator. Eine Abblaseleitung für den Wasserstoff wird vor dem Abblasen des Wasserstoffs mit Argon gespült, um Luft aus dieser Abblaseleitung zu entfernen. Anschließend wird der Wasserstoff aus dem Generator über die Abblaseleitung abgelassen. Da in der Abblaseleitung kein Luftsauerstoff mehr vorhanden ist, wird eine Explosionsgefahr durch eine Knallgasreaktion in der Abblaseleitung unterbunden.

Die JP A 58 009 548 zeigt eine Vorrichtung zur Gaskühlung einer elektrischen Rotationsmaschine. Ein Wasserstofftank, ein Inertgastank und ein Drucklufttank sind jeweils mit der Rotationsmaschine verbunden. Es sind U-förmige Leitungsstücke vorgesehen, die jeweils in die Zuleitungen der drei Tanks geschaltet sind. Im Betrieb der Rotationsmaschine sind die jeweiligen Leitungsstücke für den Inertgastank und für den Drucklufttank entfernt und die Leitungen mit Blindflanschen geschützt. Bei einer Inspektion der Rotationsmaschine ist nur das U-förmige Leitungsstück des Wasserstofftanks entfernt. Durch die an- und abflanschbaren U-förmigen Leitungsstücke wird eine erhöhte Betriebssicherheit für Betrieb und Wartung der elektrischen Rotationsmaschine erreicht.

Das Befüllen eines mit Wasserstoff gekühlten Generators und vorausgehendes Spülen mit CO₂ ist ebenfalls beschrieben in dem deutschen Gebrauchsmuster DE 295 19 578 U1, in der deutschen Auslegeschrift DE-S 3644 VIII d/21d1 vom 07.12.1943 sowie in der DE-OS 1 488 079.

Da CO₂ in flüssiger Form in Flaschen gespeichert wird, ist zur Überführung in die gasförmige Phase ein CO₂ - Verdampfer erforderlich, welcher zusätzlichen Platz braucht und u. U. wiederum mit einem Stromanschluß für eine elektrische Heizung zur Bereitstellung der erforderlichen Verdampfungswärme sowie einer Notstromversorgung versehen sein muß. Eine sicherheitsrelevante Überwachung des aktuellen CO₂-Füllstandes ist nur mittels einer aufwendigen Gewichtsmessung der CO₂-Flaschen realisierbar, da aufgrund des stark temperaturabhängigen Druckes und des ebenfalls temperaturabhängigen, zeitgleichen Vorliegens von flüssiger und gasförmiger Phase eine einfache Aussage zum Füllstand, beispielsweise über den Druck, nicht getroffen werden kann.

Wird nach dem Inertisieren zu Revisionszwecken eine Begehung des Generators erforderlich, ist zur Vermeidung toxischer Gefahren die CO₂-Füllung durch Luft zu verdrängen.

Bei diesem, wie auch bei dem zuvor beschriebenen Inertisierungsvorgang, werden die Konzentrationen Inertgas in Wasserstoff bzw. Inertgas in Luft üblicherweise durch CO₂/H₂-Konzentrationsmeßeinrichtungen überwacht.

Der Erfindung liegt die Aufgabe zugrunde, ein vereinfachtes, schnelles und energetisch günstiges Verfahren zum Inertisieren eines Generators in einem Kraftwerk anzugeben, welches auch bei Gefahrenlagen ohne Zusatzenergie einsetzbar ist.

Die Lösung dieser Aufgabe gelingt mit den Merkmalen des Patentanspruchs 1. Vorteilhafte Ausgestaltungen oder Weiterbildungen der Erfindung sind in den abhängigen Ansprüchen angegeben.

Erfindungsgemäß ist vorgesehen, daß sich zum Inertisieren eines von einem unter Überdruck stehenden Kühlmittel gekühlten Generators zunächst das Kühlmittel durch Abblasen entspannt und anschließend der Spülvorgang unter Verdrängung des Kühlmittels durch ein in gasförmiger Phase gespeichertes und in diesem Zustand dem Generator unmittelbar ohne Phasenumwandlung zugeführtes Inertgas vollzogen wird.

Vorteilhafterweise entfällt bei diesem Verfahren die sonst übliche Phasenumwandlung des Inertgases von der flüssigen in die gasförmige Phase mittels eines Verdampfers. Somit entfallen die diesbezüglichen Beschaffungs- und Unterhaltskosten und das hierfür üblicherweise vorzuhaltende Bauvolumen. Desweiteren kann auf den für die Verdampferheizung erforderlichen Stromanschluß und den Aufwand für einen Notstrombetrieb verzichtet werden, wodurch gleichzeitig die Prozeßsicherheit erhöht ist, da solche Anschlüsse in einem möglichen Störfall betroffen sein könnten. Der Energieaufwand zur Verdampferbeheizung wird eingespart, was besonders im Falle einer Notstromversorgung das Notstromnetz erheblich entlastet. Ein weiterer sicherheitsrelevanter Vorteil ist in der durch den Entfall der Phasenumwandlung gewonnenen Zeit zu sehen, da der Generator z.B. in einem Störfall verzögerungsfrei mit dem Inertgas beaufschlagt werden kann.

In besonders bevorzugter vorteilhafter Ausgestaltung kann vorgesehen sein, daß als Inertgas Argon (Ar) Verwendung findet. Dieses Edelgas steht technisch in ausreichender Menge gasförmig zur Verfügung und weist eine nahezu identische Wärmeleitfähigkeit und eine ähnliche Dichte wie das bisher verwendete CO₂ auf. Somit können vorteilhafterweise die Gaskonzentrationsmeßeinrichtungen nach dem Wärmeleitfähigkeitsprinzip weiter verwendet werden.

Ebenso bleibt das Prinzip der Gasschichtung beim Inertisieren aufgrund der Dichteunterschiede zwischen Kühlmittel und Inertgas erhalten. Weiterhin ist eine aussagekräftige Füllstandsüberwachung des Inertgasspeichers mittels Druckmeßumformer möglich, da mit hinreichender Genauigkeit aus dem Druck auf das noch vorhandene Gasvolumen geschlossen werden kann. Eine aufwendige Gasspeicherwägung, wie etwa bei CO₂ erforderlich, entfällt. Darüber hinaus ist Argon als insgesamt umweltverträglich anzusehen. Es bildet ohnehin ca. ein Volumenprozent der atmosphärischen Luft, ist ungiftig und auch in höheren Konzentrationen in Luft für den Menschen ungefährlich, während das zu ca. 0,03 Volumenprozent natürlich in Luft vorkommende CO₂ bei höheren Konzentrationen für Menschen lebensgefährdend ist.

Bevorzugt ist vorgesehen, daß sowohl die Kühlgas-, als auch die Inertgasversorgung Teil einer dem Generator zugeordneten Gasversorgungsanlage sind. Diese kann mehrere Absperrventile aufweisen, welche als ansteuerbare Magnetventile ausgebildet sein können.

Die Kühlgasversorgung ist z.B. mittels einer Speise- und einer Spülleitung an den Generator gekoppelt und führt über die Speiseleitung diesem das zum Befüllen notwendige Kühlgasvolumen zu und ersetzt im Betrieb die im wesentlichen durch Ausgasung hervorgerufene Kühlgasleckage. Während des Betriebes zirkuliert das Kühlgasvolumen innerhalb des Generators in einem geschlossenen Kühlkreislauf.

Bevorzugt ist für eine derartige Anordnung von Leitungen und Absperrventilen vorgesehen, daß zum Inertisieren zunächst durch Entspannen des Kühlgases über die Speiseleitung in eine Abblaseleitung dessen Überdruck abgebaut wird, wobei die Spülleitung verschlossen ist. Anschließend wird das Inertgas über zumindest ein Magnetventil in die Spülleitung derart eingespeist, daß es den Generator von einer geodätisch unten liegenden Stelle auffüllt.

In weiterer, vorteilhafter Ausgestaltung kann vorgesehen sein, das Inertisierungsverfahren mittels einer zentralen Prozeßsteuereinheit zu automatisieren. Hierbei können bei Revisionsarbeiten in Abhängigkeit von manuellen und bei Störfällen zusätzlich von automatisch ausgelösten Befehlssignalen alle notwendigen Gasströme durch vorprogrammiertes Öffnen bzw. Schließen der Magnetventile gesteuert werden.

Vorzugsweise ist eine zentrale Prozeßsteuereinheit vorgesehen, in welcher durch manuell oder automatisch ausgelöste Befehlssignale Teilsteuerungen zum automatisierten Befüllen oder Entleeren aktiviert werden können. Zu diesem Zweck sind die einer Kühlgasversorgung, einer Preßluftversorgung und die einer Inertgasversorgung einer Gasversorgungsanlage des Generators zugeordneten Ventileinrichtungen als ansteuerbare, elektrisch betätigte Magnet- oder Regelventile ausgebildet. Nach Aktivierung von einer der beiden Teilsteuerungen wird dann in vorprogrammierter und automatisierter Abfolge durch dementsprechendes Ansteuern der Ventileinrichtungen das aktuell im Generator befindliche Gas durch das Inertgas aus der Inertgasversorgung verdrängt und dieses im Falle der Teilsteuerung Befüllen durch Spülen mit Kühlgas bzw. im Falle der Teilsteuerung Entleeren durch Spülen mit Luft aus der Preßluftversorgung verdrängt.

Vorteilhafterweise wird durch die automatisierte, mit logischen Bedingungen verknüpfte Abfolge eine hohe Prozeßsicherheit erreicht, da manuelle Fehlbedienungen ausgeschlossen sind. Gleichzeitig ist das Verfahren mit geringem personellen Aufwand in vergleichsweise kurzer Zeit von einer Warte des Kraftwerkes aus durchzuführen.

In vorteilhafter Ausgestaltung kann vorgesehen sein, daß der Gasversorgungsanlage zugeordnete Konzentrationsmeßeinrichtungen von der Prozeßsteuereinheit aus in ihrem Meßbereich umgeschaltet und somit dem aktuell laufenden Spülvorgang angepaßt betrieben werden können. Hierbei kann in Abhängigkeit vom Erreichen von vorgegebenen und in der Prozeßsteuereinheit abgespeicherten Konzentrationswerten ein Spülvorgang beendet und ein neuer eingeleitet werden.

Zur weiteren Erhöhung der Prozeßsicherheit ist bevorzugt vorgesehen, daß bei Vorlage von zumindest einem von mehreren, einen möglichen Fehlbetrieb signalisierenden Kriterien ein automatisches Entleeren des Generators eingeleitet wird.

Weitere Vorteile der Erfindung ergeben sich aus den nachfolgend anhand der Zeichnung näher erläuterten Ausführungsbeispielen.

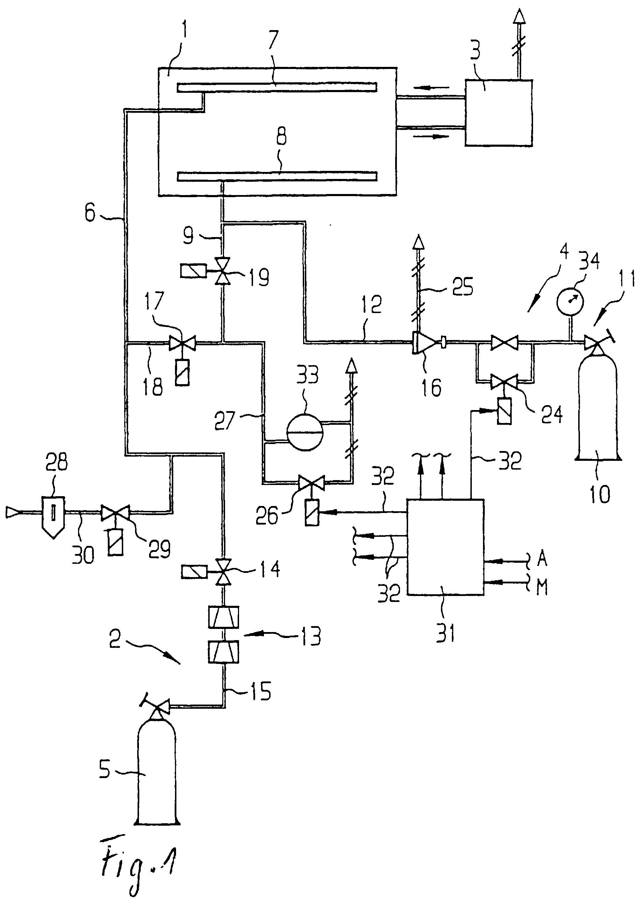

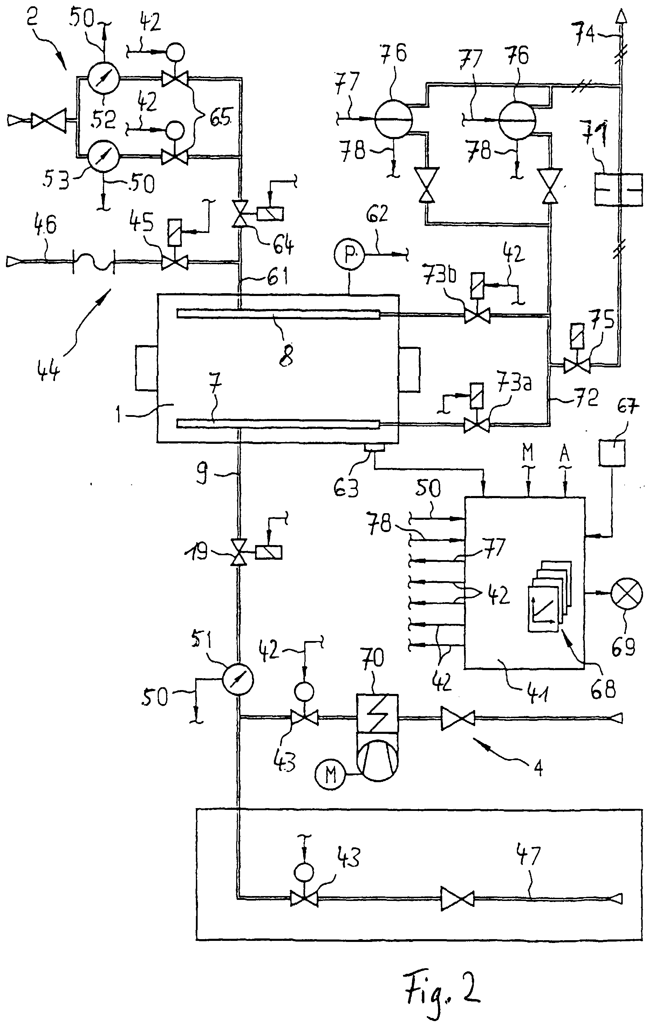

Es zeigen in stark schematisierter Darstellung Figuren 1 und 2 jeweils einen stromerzeugenden Generator eines nicht dargestellten Kraftwerkes.

In Figur 1 ist dem Generator 1 ist eine Gasversorgungsanlage zugeordnet, welche unter anderem eine Kühlmittelversorgung 2, einen Gastrockner 3 und eine Spül- bzw. Inertgasversorgung 4 aufweist.

Als Kühlmittel wird in Flaschen 5 gespeicherter Wasserstoff (H₂ ) verwendet, welcher beim Befüllen über eine Speiseleitung 6 einem geodätisch oberen Verteilerrohr 7 des Generators 1 zugeführt wird. Ein unteres Verteilerrohr 8 ist über eine Spülleitung 9 und ein Absperrventil 19, welches dann geöffnet ist, mit der Abblaseleitung 27, welche über ein dann geöffnetes Absperrventil 26 das verdrängte Argon in die Atmosphäre entläßt, verbunden. Parallel zu diesem Absperrventil 26 liegt eine Konzentrationsmeßeinrichtung 33, welche ermittelt, wann der jeweils ablaufende Gasaustausch abgeschlossen ist. Der Gastrockner 3 ist von bekanntem, ein Gebläse, eine Heizung und einen Gastrockner-Behälter aufweisendem Aufbau und wird daher nicht näher erläutert.

Als Inertgas wird in einem aus Flaschen 10 gebildeten Inertgasspeicher 11 gasförmig gespeichertes Argon verwendet. Der noch vorhandene Vorrat läßt sich leicht anhand eines Druckmessers 34 in Verbindung mit dem Volumen der Flaschen 10 feststellen. Dieses Inertgas wird über eine Inertgasleitung 12 in noch zu erläuternder Weise dem Generator 1 zugeführt. Das Kühlmittel wird aus Flaschen 5 über eine einen Druckminderer 13 und ein Absperrventil 14 aufweisende Kühlgasleitung 15 in die Speiseleitung 6 eingekoppelt. Zwischen dieser und der Spülleitung 9 ist eine von einem Absperrventil 17 beherrschte Verbindungsleitung 18 angeordnet. Zwischen Absperrventil 17 und Verteilerrohr 8 ist im Zuge der Spülleitung 9 ein Absperrventil 19 angebracht. Die Inertgasleitung 12 ist mit der Spülleitung 9 und dem Verteilerrohr 8 verbunden und weist ein Absperrventil 24 und ein Überdruckventil 16 mit Abblasestutzen 25 auf.

Eine von einem weiteren Absperrventil 26 beherrschte Abblaseleitung 27 ist über Absperrventile 17 bzw. 19 mit der Verbindungsleitung 18 bzw. der Spülleitung 19 verbunden. Als weiteres Bestandteil der Gasversorgungsanlage ist in die Speiseleitung 6 Druckluft über eine einen Luftfilter und Wasserabscheider 28 und ein weiteres Absperrventil 29 enthaltende Druckluftleitung 30 einspeisbar. Alle vorgenannten Absperrventile 14, 17, 19, 20, 24, 26 und 29 können manuell bedienbar sein, sind aber im bevorzugten Ausführungsbeispiel als von einer zentralen Prozeßsteuereinheit 31 aus über Steuerleitungen 32 ansteuerbare Magnetventile ausgebildet. Im Normalbetrieb, d.h. unter Last, ist der Generator 1 mit H₂ unter Druck gefüllt und die Absperrventile 17, 24, 26 und 29 sind geschlossen, Absperrventil 19 ist geöffnet, so daß immer eine geringe Menge Gas durch die Konzentrationsmeßeinrichtung 33 fließt. Verluste an Kühlgas werden von der Kühlgasversorgung 2 ausgeglichen. Zur Einleitung des Inertisierungsverfahrens wird der Prozeßsteuereinheit 31 ein manuell ausgelöstes Befehlssignal M und/oder ein automatisch ausgelöstes Befehlssignal A zugeführt. In vorprogrammierter Abfolge werden zunächst die Absperrventile 17, 19 und 26 geöffnet, so daß das sich entspannende Kühlgas über die Abblaseeinrichtung 27 in die Atmosphäre entweichen kann. Nach der Entspannung des Kühlgases wird das Absperrventil 19 geschlossen. Anschließend wird Absperrventil 24 im Öffnungssinn betätigt, wodurch unter Druck stehendes Argon aus dem Inertgasspeicher 11 über Inertgasleitung 12 und Spülleitung 9 zum unteren Verteilerrohr 8 unter Verdrängung des Kühlgases gelangt.

Das vorbeschriebene Verfahren arbeitet schnell und energetisch günstig. Wird beispielsweise durch einen Störfall, z.B. ein Feuer, das Befehlssignal A durch Brandmelder ausgelöst, kann durch den verfahrensgemäßen Ablauf schnell und unmittelbar ohne Phasenwandlung des Inertgases die H₂ -Füllung ausgeschoben werden. Hierdurch wird gegebenenfalls ein größerer Schaden verhindert. Soll der Generator 1 für eine Revision begehbar gemacht werden, wird die Inertgasfüllung durch Entnahme von Druckluft aus einem Druckluftnetz über die Druckluftleitung 30 und Speiseleitung 6 verdrängt, indem es über die Spülleitung 9, das Absperrventil 19, die Abblaseleitung 27 und das Absperrventil 26 abgeblasen wird. Die Konzentration von Inertgas in Kühlgas und von Inertgas in Luft kann bei beiden Spülvorgängen über die ständig in Betrieb befindliche Konzentrationsmeßeinrichtung 33 kontrolliert werden, welche mit der Prozeßsteuereinheit 31 zusammenwirkt. Das Einsteuern der Druckluft erfolgt somit ebenfalls automatisiert durch Ansteuerung des Absperrventils 29 und der weiteren, zuvor beschriebenen Absperrventile. Soll nach Abschluß der Revision mit Begehung der Generator wieder in den Normalbetrieb gehen, werden die zuvor beschriebenen Verfahrensschritte in umgekehrter Reihenfolge durchlaufen. Zunächst wird also, zur Vermeidung eines explosiven Wasserstoff-Luft-Gemisches, die Luft durch Spülen mit Argon verdrängt, anschließend Argon mit H₂ ausgespült. Dazu wird zunächst Argon über die Spülleitung 9 zugeführt zur Verdrängung der Luft, die über die Speiseleitung 6 und die Abblaseleitung 27 entweicht. Dann wird der anfangs beschriebene Schritt zur Füllung des Generators mit Kühlgas durchgeführt.

In Figur 2 ist ein wasserstoffgekühlter Generator 1 eines Kraftwerkes mit einer Gasversorgungsanlage dargestellt, welche eine den Wasserstoff (H₂) als Kühlgas bereitstellende Kühlgasversorgung 2, eine Preßluftversorgung 3 und eine Argon oder Kohlendioxid (CO₂) als Inertgas bereitstellende Inertgasversorgung 4 aufweist.

Die Gasversorgungsanlage weist weiterhin eine Mehrzahl von noch zu erläuternden Ventileinrichtungen auf, welche als ansteuerbare, elektrisch betätigte Magnetventile oder als ebensolche Regelventile ausgebildet sind. Der Betrieb des Generators 1 wird von einer nicht gezeigten Warte aus vorgenommen bzw. überwacht. Dieser Warte ist eine zentrale Prozeßsteuereinheit 41 zugeordnet, in welcher in Abhängigkeit von manuell oder automatisch ausgelösten Befehlssignalen M oder A, eine Teilsteuerung Befüllen oder eine Teilsteuerung Entleeren aktiviert wird. Die Prozeßsteuereinheit 41 ist über Signalleitungen 42 mit den Ventileinrichtungen verbunden.

Zunächst wird die Teilsteuerung Befüllen erläutert. Dabei wird davon ausgegangen, daß der stillgesetzte Generator 1 z. B. aufgrund einer Begehung zu Revisionszweken mit atmosphärischer Luft gefüllt ist. Nach dem Auslösen des manuellen Befehlssignales M wird ein in der Inertgasversorgung 4 angeordnetes Regelventil 43 von der Prozeßsteuereinheit 41 aus automatisch im Öffnungssinn betätigt, ein stromab dazu in einer Speiseleitung 9 (Spülleitung) liegendes Magnetventil 19 geöffnet. Aus einer der Inertgasversorgung 4 zugeordneten Flaschenbündelversorgung wird über das Regelventil 43 gasförmiges Argon zugeführt oder flüssiges CO₂ entnommen und über einem Verdampfer 70 entspannt. Um dessen zulässige Kapazität nicht zu überschreiten, wird der Ansteuerung des Regelventils 43 das Signal eines Massendurchflußmessers 51 überlagert. Die Speiseleitung 9 mündet in ein unteres Verteilerrohr 7 des Generators 1 und verdrängt Luft über eine Verbindungsleitung 72. Zwischen Verteilerrohr 7 und dieser Verbindungsleitung 72 ist ein geöffnetes oberes Magnetventil 73b angeordnet, während ein in einer Abblaseleitung 74 angeordnetes, weiteres Magnetventil 75 geöffnet ist. In dieser Abblaseleitung ist eine Blende 71 angeordnet, die bewirkt, daß ein kleiner Teil der verdrängten Luft auch durch zwei parallel zwischen Verbindungsleitung 72 und Abblaseleitung 74 angeordnete Konzentrationsmeßeinrichtungen 76 fließt. Diese sind über Signalleitungen 77 auf einen von drei Meßbereichen umschaltbar und erfassen in diesem Spülvorgang die Konzentration von Argon oder CO₂ in Luft und übertragen einen ersten aktuellen Konzentrationswert KW1 über Signalleitungen 78 zu der Prozeßsteuereinheit 41. In dieser sind vorgegebene, erste Soll-Konzentrationswerte KWS1 gespeichert und bei Erreichen von KWS1 wird die Konzentrationsmeßeinrichtung 76 auf einen zweiten Meßbereich Argon bzw. CO₂ in H₂ umgeschaltet. Der beschriebene Spülvorgang wird durch Schließen der Ventile 43 und 19 beendet und ein weiterer Spülvorgang zur Verdrängung von Argon bzw. CO₂ durch H₂ durch öffnen eines Magnetventils 64 und eines von zwei Regelventilen 65 einer Speiseleitung 61 für Kühlgas eingeleitet.

Aus einem Zentrallager entnommener Wasserstoff verdrängt, über ein oberes Verteilerrohr 8 eingespeist, das Inertgas, wobei in der bereits zuvor beschriebenen Weise ein zweiter aktueller Konzentrationswert KW2 erfaßt und bei Erreichen eines zweiten vorgegeben Soll-Konzentrationswertes KWS2 auch dieser Spülvorgang beendet wird.

Anschließend wird die Konzentrationsmeßeinrichtung 76 auf einen dritten Meßbereich H₂ in Luft umgeschaltet und nach dem Schließen der Magnetventile 73b und 75 der Generator 1 auf seinen Nenndruck von ca. 3 bis 6 bar Überdruck mit H₂ gefüllt. Durch das geöffnete untere Magnetventil 73a fließt permanent eine geringe Menge Kühlgas durch die Konzentrationsmeßeinrichtungen 76. Das Einhalten des vorgegebenen Druckwertes wird permanent über einen Drucksensor 63 oder 62 von der Prozeßsteuereinheit 41 überwacht. Auch können weitere Mengendurchflußmesser 51, 52, 53 zur Kontrolle der tatsächlich fließenden Gasmengen vorhanden sein, die mit der Prozeßsteuereinheit 41 über Signalleitungen 50 verbunden sind.

Während des anschließenden Leistungebetriebes des Generators 1 unter Stromerzeugung wird aus dem H₂-Zentrallager ständig ein bestimmter Volumenstrom über die Speiseleitung 61 in den Generator 1 gedrückt, um das zur Konzentrationsmessung erforderliche Volumen sowie das über den Dichtölbehälter des Generators 1 ausgasende Kühlgasvolumen zu ersetzten.

Die Teilsteuerung Entleeren läuft wie folgt ab. Über ein manuelles Befehlssignal M oder ein automatisches Befehlssignal A wird die Teilsteuerung Entleeren der Prozeßsteuereinheit 41 aktiviert. Das Signal A wird ausgelöst, wenn die Druckdifferenz zwischen Kühlgas und Dichtöl einen vorgegebenen Grenzwert unterschreitet oder während einer in der Prozeßsteuereinheit 41 gespeicherten, voreinstellbaren Zeitspanne der Nenndruck des Generators 1 um einen bestimmten Betrag abfällt oder die Konzentration von Luft in H₂ im Generator 1 einen vorgegebenen Grenzwert überschreitet oder ein beispielsweise als Brandmelder ausgelegter Störfallmelder 67 des Kraftwerkes einen Brand meldet.

Unabhängig von der automatischen oder der manuellen Auslösung wird zunächst die Generatorleistung abgefragt und bei vorliegender Entregung des Generators 1 der Nenndruck über die Abblaseleitung 74 entspannt. Anschließend erfolgen zwei Spülvorgänge wie bei der Teilsteuerung Befüllen in umgekehrter Reihenfolge. Nach dem Absperren der Ventile 64 und 65 wird über Ventile 43 und 19 das Inertgas unter Verdrängung des Kühlgases eingespeist, wobei wiederum mittels erfasster Konzentrationswerte KW3,4 und durch Vergleich mit vorgegebenen Soll - Konzentrationswerten KWS3,4 dieser Spülvorgang überwacht und beendet wird. Dann erfolgt Spülen des Inertgases durch Entnahme von Luft aus der Preßluftversorgung 44, wobei ein Magnetventil 45 in einer Preßluftleitung 46 geöffnet wird. Eine Einleitung von Preßluft in den Generator 1 wird dabei durch eine von der Prozeßsteuereinheit 41 aus betätigte , nicht gezeigte Verriegelung nur dann ermöglicht, wenn ein bestimmter Konzentrationswert für H₂ im Generator 1 unterschritten ist.

Für beide Teilsteuerungen sind Kurvenverläufe des zeitlichen Ablaufs der Spülvorgänge in Mappen 68 der Prozeßsteuereinheit 41 abgelegt. Diese werden ständig mit den aktuell erfaßten Daten korreliert. Werden dabei vorgegebene Abweichungswerte erreicht oder überschritten, wird entweder eine Alarmeinrichtung 69 betätigt oder der jeweilige Spülvorgang abgebrochen.

Bei Verwendung von Argon anstatt von CO₂ als Inertgas kann unter Einsparung des Aufwandes für den Verdampfer 70 und ohne Phasenwandlung Argon direkt aus einer Flaschenbündelversorgung über eine Leitung 47 entnommen werden, wie innerhalb eines umrahmten Feldes in Figur 2 dargestellt.

Zusammenfassend können Befüllungs- und Entleerungsvorgänge mit Inertisierung problemlos automatisch durchgeführt werden. Beim Befüllen erfolgt das Inertisieren mit Verdrängen von Luft durch Inertgas, wobei oberes Magnetventil 73b und Magnetventil 75 in der Abblaseleitung geöffnet, unteres Magnetventil 73a geschlossen, Magnetventile 64 und 45 geschlossen, Magnetventil 19 geöffnet werden. Das anschließende Füllen mit Verdrängen des Inertgases durch H₂-Gas erfolgt dadurch, daß unteres Magnetventil 73a und Magnetventil 75 in der Abblaseleitung geöffnet, oberes Magnetventil 73b geschlossen, Magnetventile 45 und 19 geschlossen, Magnetventil 64 geöffnet werden.

Bei Normalbetrieb des Generators 1 sind unteres Magnetventil 73a geöffnet, Magnetventil 75 in der Abblaseleitung und oberes Magnetventil 73b geschlossen, Magnetventile 45 und 19 geschlossen und Magnetventil 64 geöffnet.

Beim Entleeren sind während des Inertisieren mit Verdrängen des H₂-Gases durch das Inertgas oberes Magnetventil 73b und Magnetventil 75 in der Abblaseleitung geöffnet, unteres Magnetventil 73a geschlossen, Magnetventile 64 und 45 geschlossen sowie Magnetventil 19 geöffnet. Anschließen wird mit Luft gespült, wobei während des Verdrängen des Inertgases durch Luft unteres Magnetventil 73a und Magnetventil 75 in der Abblaseleitung geöffnet, oberes Magnetventil 73b geschlossen, Magnetventile 19 und 64 geschlossen und Magnetventil 45 geöffnet sind.

## Patentansprüche

1. Verfahren zum Inertisieren eines Generators (1) in einem Kraftwerk, wobei der Generator (1) im Normalbetrieb mit einem gasförmigen, unter Druck stehenden Kühlmittel, insbesondere Wasserstoff, gekühlt wird, mit den Schritten:
a) Abblasen von Kühlmittel durch Entspannen,
b) Spülen des Generators (1) unter Verdrängung des Kühlmittels durch ein gasförmig gespeichertes und dem Generator (1) unmittelbar zugeführtes Inertgas.

2. Verfahren nach Anspruch 1,
**dadurch gekennzeichnet**, daß als Inertgas Argon verwendet wird.

3. Verfahren nach einem der Ansprüche 1 oder 2,
**dadurch gekennzeichnet**, daß zwischen einem Inertgasspeicher (11) und dem Generator (1) zumindest ein Absperrventil (24, 43) angeordnet ist.

4. Verfahren nach Anspruch 3,
**dadurch gekennzeichnet,** daß das Absperrventil (24, 43) für Schritt a) geschlossen und für Schritt b) geöffnet wird.

5. Verfahren nach Anspruch 4,
**dadurch gekennzeichnet**,daß das Inertgas in dem Inertgasspeicher (11) unter Druck gespeichert und bei Bedarf durch Betätigung des entsprechenden Absperrventiles (24, 43) in den Generator (1) eigespeist wird.

6. Verfahren nach Anspruch 5,
**dadurch gekennzeichnet**, daß ein Absperrventil (17) zwischen einer dem Generator (1) zugeordneten Speiseleitung (6) und einer Spülleitung (9) für Kühlmittel angeordnet ist, und in der Spülleitung (9) generatorseitig dazu ein weiteres Absperrventil (19) vorhanden ist, so daß Speiseleitung (6) und die Spülleitung (9) wahlweise einzeln oder gleichzeitig mit der Abblaseleitung (27) verbunden werden können.

7. Verfahren nach Anspruch 6,
**dadurch gekennzeichnet,** daß
- im Normalbetrieb das Absperrventil (17) zwischen Speiseleitung (6) und Spülleitung (9) geschlossen und das Absperrventil (19) geöffnet ist,
- im Schritt a) ein in einer mit der Spülleitung (9) verbundenen Abblaseleitung (27) angeordnetes, weiteres Absperrventil (26) und die Absperrventile (17 und 19) geöffnet sind, wodurch sich das Kühlmittel durch die Speiseleitung (6) und die Spülleitung (9) über die Abblaseleitung (27) entspannen kann, und
- im Schritt b) durch Schließen des in der Spülleitung (9) angeordneten Absperrventiles (19) und Einspeisen des Inertgases über eine mit der Spülleitung (9) verbundene Inertgasleitung (12) der Generator (1) gespült und dabei das Kühlmittel über die ebenfalls mit der Abblaseleitung (27) verbundene Speiseleitung (6) verdrängt wird.

8. Verfahren nach einem oder mehreren der vorhergehenden Ansprüche 3 bis 7,
**dadurch gekennzeichnet**, daß mindestens ein Absperrventil (13a, 13b, 14, 17, 19, 24, 26, 29, 43, 64) über einen Magnetschalter angesteuert wird.

9. Verfahren nach Anspruch 8,
**dadurch gekennzeichnet**,daß eine zentrale Prozeßsteuereinheit (31, 41) manuelle und/oder automatisch ausgelöste Befehlssignale (M, A) zum automatisierten Inertisieren des Generators (1) empfängt und in vorprogrammierter Abfolge die Magnetventile in Öffnungs- bzw. Schließrichtung betätigt.

10. Verfahren nach Anspruch 8 bei dem das Inertisieren während des Befüllens oder Entleerens des Generators (1) mit einer dem Generator (1) zugeordneten Gasversorgungsanlage, welche zumindest eine Kühlgasversorgung (2), eine Preßluftversorgung (3) und eine Inertgasversorgung (4) sowie diesen zugeordnete Ventileinrichtungen (13a, 13b, 19, 43, 64) aufweist, dadurch durchgeführt wird, daß eine erste Teilsteuerung "Befüllen" bzw. eine zweite Teilsteuerung "Entleeren" einer zentralen Prozeßsteuereinheit (31, 41) aktiviert wird, ein automatisches Ansteuern der als Magnet- oder Regelventile ausgebildeten Ventileinrichtungen von der Prozeßsteuereinheit (31, 41) aus erfolgt, wobei gemäß der jeweils aktivierten Teilsteuerung die Ventileinrichtungen (13a, 13b, 19, 43, 64) in vorprogrammierter Abfolge derart betätigt werden, daß das im Generator (1) vor enthaltene Kühlgas mittels eines aus der Inertgasversorgung (4) eingebrachten Inertgases verdrängt und dieses anschließend durch Luft aus der Preßluftversorgung bzw. Kühlgas aus der Kühlgasversorgung (2) verdrängt wird und die aktivierte Teilsteuerung nach Ablauf der vorprogrammierten Abfolge beendet wird.

11. Verfahren nach Anspruch 10,
**dadurch gekennzeichnet**, daß, nach Aktivieren der Teilsteuerung "Befüllen" über ein elektrisches Regelventil (43) der Inertgasversorgung (4) der Generator (1) mit dem Inertgas gespült und mittels einer dem Generator (1) zugeordneten Konzentrationsmeßeinrichtung (76) in einem ersten Meßbereich die Konzentration von Inertgas in Luft des Generators (1) gemessen und der Prozeßsteuereinheit (41) zugeführt wird und diese bei Erreichen eines ersten vorgegebenen Soll-Konzentrationswertes (KWS1) den Spülvorgang beendet.

12. Verfahren nach Anspruch 11,
**dadurch gekennzeichnet**, daß die Prozeßsteuereinheit (41) nach Erreichen des ersten Konzentrationswertes (KW1) die Konzentrationsmeßeinrichtung (76) auf einen zweiten Meßbereich für Konzentration von Inertgas in Kühlgas umschaltet und über ein weiteres elektrisches Regelventil (65) der Befüllvorgang unter Spülen des Inertgases mit Kühlgas fortgesetzt wird, bis nach Erreichen eines zweiten vorgegebenen Soll-Konzentrtionswertes (KWS2) dieser Spülvorgang beendet wird.

13. Verfahren nach Anspruch 10,
**dadurch gekennzeichnet**, daß, nach Aktivieren der Teilsteuerung "Entleeren" über das elektrische Regelventil (43) der Inertgasversorgung (4) der Generator (1) mit dem Inertgas gespült wird und mittels einer dem Generator (1) zugeordneten Konzentrationsmeßeinrichtung (76) in einem ersten Meßbereich die Konzentration von Inertgas in Kühlgas gemessen und der Prozeßsteuereinheit (41) zugeführt und diese bei Erreichen eines vorgegebenen Soll-Konzentrationswertes (KWS3) diesen Spülvorgang beendet.

14. Verfahren nach Anspruch 13,
**dadurch gekennzeichnet**, daß die Prozeßsteuereinheit (41) nach Erreichen des Soll-Konzentrationswertes (KWS3) die Konzentrationsmeßeinrichtung (76) auf einen zweiten Meßbereich für die Konzentration von Luft in Inertgas umschaltet und über ein weiteres Magnetventil (45) der Entleervorgang unter Spülen des Inertgases mit Luft fortgesetzt wird, bis nach Erreichen eines vorgegebenen Soll-Konzentrationswertes (KWS4) dieser Spülvorgang beendet wird.

15. Verfahren nach Anspruch 10,
**dadurch gekennzeichnet**, daß ein automatisches Befehlssignal (A) zum Entleeren dann ausgelöst wird, wenn zumindest eines der folgenden Kriterien erfüllt ist:
I) die Druckdifferenz zwischen Kühlgas und Dichtöl des Generators (1) unterschreitet einen vorgegebenen Grenzwert,
II) während einer voreinstellbaren Zeitspanne bricht der Nenndruck im Generator (1) um einen vorbestimmten Wert ein,
III) die Konzentration von Kühlgas in Luft im Generator (1) unterschreitet die natürliche Konzentration des Kühlgases in atmosphärischer Luft,
IV) ein dem Kraftwerk zugeordneter Brandmelder (69) signalisiert einen Störfall.

16. Verfahren nach einem der Ansprüche 10 bis 15,
**dadurch gekennzeichnet**, daß in der Prozeßsteuereinheit (41) zeitliche Kurvenverläufe (68) von Befüllund/oder Entleervorgängen gespeichert und diese mit den aktuellen Befüll- oder Entleervorgängen verglichen werden und bei Abweichung um einen vorgebbaren Wert entweder eine Alarmeinrichtung (69) betätigt oder eine aktuell betätigte Ventileinrichtung geschlossen wird.

17. Verfahren nach einem der Ansprüche 10 bis 16,
**dadurch gekennzeichnet,** daß der Prozeßsteuereinheit (41) über Signalleitungen (50) zusätzliche Meßwerte von Meßaufnehmern (51; 52; 53; 62; 63), insbesondere Durchflußmessern (51; 52; 53) und/oder Drucksensoren (62; 63), zugeführt werden, deren zeitlicher Verlauf mit Sollwerten verglichen wird, um Fehler zu erkennen und zu melden.

## Claims

1. Method for inerting a generator (1) in a power station, the generator (1) in normal operation being cooled with a gaseous, pressurized coolant, in particular hydrogen, comprising the steps:
a) blowing off coolant by venting,
b) flushing the generator (1), so displacing the coolant by means of an inert gas which is stored in gas form and is supplied directly to the generator (1).

2. Method according to Claim 1, characterized in that argon is used as the inert gas.

3. Method according to one of Claims 1 or 2, characterized in that at least one stop valve (24, 43) is arranged between an inert-gas store (11) and the generator (1).

4. Method according to Claim 3, characterized in that the stop valve (24, 43) is closed for step a) and is opened for step b).

5. Method according to Claim 4, characterized in that the inert gas is stored under pressure in the inert-gas store (11) and, when required, is fed into the generator (1) by actuating the corresponding stop valve (24, 43).

6. Method according to Claim 5, characterized in that a stop valve (17) is arranged between a feedline (6) assigned to the generator (1) and a flushing line (9) for coolant, and a further stop valve (19) is present on the generator side in the flushing line (9), so that feedline (6) and the flushing line (9) can optionally be connected individually or simultaneously to the blow-off line (27).

7. Method according to Claim 6, characterized in that
- in normal operation, the stop valve (17) between feedline (6) and flushing line (9) is closed and the stop valve (19) is open,
- in step a) a further stop valve (26), which is arranged in a blow-off line (27) connected to the flushing line (9), and the stop valves (17 and 19) are open, as a result of which the coolant can be vented through the feedline (6) and the flushing line (9) via the blow-off line (27), and
- in step b) the generator (1) is flushed by closing the stop valve (19) arranged in the flushing line (9) and feeding in the inert gas via an inert-gas line (12) which is connected to the flushing line (9) and, in the process, the coolant is displaced via the feedline (6), which is likewise connected to the blow-off line (27).

8. Method according to one or more of the preceding Claims 3 to 7, characterized in that at least one stop valve (13a, 13b, 14, 17, 19, 24, 26, 29, 43, 64) is controlled by means of a magnetic switch.

9. Method according to Claim 8, characterized in that a central process control unit (31, 41) receives manual and/or automatically triggered command signals (M, A) for the automated inerting of the generator (1) and the solenoid valves are actuated in the opening or closing direction in a preprogrammed sequence.

10. Method according to Claim 8, in which the inerting, during filling or emptying of the generator (1) using a gas supply unit which is assigned to the generator (1) and has at least one cooling-gas supply system (2), a compressed-air supply system (3) and an inert-gas supply system (4) as well as valve devices (13a, 13b, 19, 43, 64) assigned to these systems, is carried out in that a first partial control sequence "filling" or a second partial control sequence "emptying" of a central process control unit (31, 41) is activated, the valve devices, which are designed as solenoid or control valves, are automatically controlled by the process control unit (31, 41), the valve devices (13a, 13b, 19, 43, 64), in accordance with the respectively activated partial control sequence, being actuated in a preprogrammed sequence in such a manner that the cooling gas contained in the generator (1) is displaced by means of an inert gas introduced from the inert-gas supply system (4) and this inert gas is then displaced by air from the compressed-air supply system or cooling gas from the cooling-gas supply system (2), and the activated partial control sequence is terminated after completion of the preprogrammed sequence.

11. Method according to Claim 10, characterized in that, after activation of the partial control sequence "filling" the generator (1) is flushed with the inert gas via an electrical control valve (43) of the inert-gas supply system (4) and, in a first measurement range, the concentration of inert gas in air in the generator (1) is measured by means of a concentration measuring device (76) assigned to the generator (1) and is fed to the process control unit (41) which, on reaching a first predetermined desired concentration value (KWS1) terminates the flushing operation.

12. Method according to Claim 11, characterized in that the process control unit (41), after reaching the first concentration value (KW1), switches the concentration measuring device (76) over to a second measurement range for measuring the concentration of inert gas in cooling gas and the filling operation is continued via a further electrical control valve (65) while flushing the inert gas with cooling gas until this flushing operation is terminated after reaching a second predetermined desired concentration value (KWS2).

13. Method according to Claim 10, characterized in that, after activation of the partial control sequence "emptying", the generator (1) is flushed with the inert gas via the electrical control valve (43) of the inert-gas supply system (4) and, in a first measurement range, the concentration of inert gas in cooling gas is measured by means of a concentration measuring device (76) assigned to the generator (1) and is fed to the process control unit (41) which, on reaching a predetermined desired concentration value (KWS3) terminates this flushing operation.

14. Method according to Claim 13, characterized in that the process control unit (41), after reaching the desired concentration value (KWS3), switches the concentration measuring device (76) over to a second measurement range for measuring the concentration of air in inert gas and the emptying operation is continued via a further solenoid valve (45) while flushing the inert gas with air until this flushing operation is terminated after reaching a predetermined desired concentration value (KWS4) .

15. Method according to Claim 10, characterized in that an automatic command signal (A) for emptying is triggered when at least one of the following criteria is fulfilled:
I) the pressure difference between cooling gas and sealing oil of the generator (1) falls below a predetermined limit value,
II) during a period of time which can be preset, the nominal pressure in the generator (1) falls below a predetermined value,
III) the concentration of cooling gas in air in the generator (1) falls below the natural concentration of the cooling gas in atmospheric air,
IV) a fire alarm (69) assigned to the power station signals an emergency.

16. Method according to one of Claims 10 to 15, characterized in that temporal curves (68) of filling and/or emptying operations are stored in the process control unit (41) and are compared with the current filling or emptying operations and, in the event of a deviation by a predeterminable value, either an alarm device (69) is actuated or a currently actuated valve device is closed.

17. Method according to one of Claims 10 to 16, characterized in that additional measured values from measurement sensors (51; 52; 53; 62; 63), in particular flowmeters (51; 52; 53) and/or pressure sensors (62; 63), are supplied to the process control unit (41) via signal lines (50), the temporal progress of which values is compared with desired values in order to detect and indicate errors.

## Revendications

1. Procédé pour rendre inerte un générateur (1) dans une centrale électrique, le générateur (1) étant refroidi en fonctionnement normal par un réfrigérant gazeux sous pression, notamment de l'hydrogène, comprenant les étapes suivantes :
a) purge du réfrigérant par détente,
b) rinçage du générateur (1) en refoulant le réfrigérant par un gaz inerte stocké à l'état gazeux et directement apporté au générateur (1).

2. Procédé suivant la revendication 1, **caractérisé** en ce qu'on utilise comme gaz inerte de l'argon.

3. Procédé suivant la revendication 1 ou 2, **caractérisé** en ce qu'au moins une vanne (24, 43) d'isolement est disposée entre un réservoir (11 ) de gaz inerte et le générateur (1).

4. Procédé suivant la revendication 3, **caractérisé** en ce que la vanne (24, 43) d'isolement est fermée pour l'étape a) et ouverte pour l'étape b).

5. Procédé suivant la revendication 4, **caractérisé** en ce que le gaz inerte est stocké sous pression dans le réservoir (11 ) de gaz inerte, et est envoyé en cas de besoin dans le générateur (1) en actionnant la vanne (24, 43) d'isolement correspondante.

6. Procédé suivant la revendication 5, **caractérisé** en ce qu'une vanne (17) d'isolement est disposée entre une conduite (6) d'alimentation associée au générateur (1) et une conduite (9) de rinçage pour du réfrigérant, et une autre vanne (19) d'isolement est présente dans la conduite (9) de rinçage, côté générateur par rapport à la vanne précédente, de sorte que la d'alimentation et la conduite (9) de rinçage peuvent être au choix reliées individuellement ou simultanément à la conduite (27) de purge.

7. Procédé suivant la revendication 6, **caractérisé** en ce que
- en fonctionnement normal, la vanne (17) d'isolement entre la conduite (6) d'alimentation et la conduite (9) de rinçage est fermée, et la vanne (19) d'isolement est ouverte,
- à l'étape a), une autre vanne (26) d'isolement, disposée dans une conduite (27) de purge reliée à la conduite (9) de rinçage, et les vannes (17 et 19) d'isolement sont ouvertes, de sorte que le réfrigérant peut se détendre dans la conduite (27) de purge en passant par la conduite (6) d'alimentation et la conduite (9) de rinçage, et
- à l'étape b), en fermant la vanne (19) d'isolement disposée dans la conduite (9) de rinçage et alimentant le gaz inerte au moyen d'une conduite (12) de gaz inerte reliée à la conduite (9) de rinçage, le générateur (1) est rincé et le réfrigérant est alors refoulé par la conduite (6) d'alimentation, elle aussi reliée à la conduite (27) de purge.

8. Procédé suivant une ou plusieurs des revendications précédentes 3 à 7, **caractérisé** en ce qu'au moins une des vannes d'arrêt (13a, 13b, 14, 17, 19, 24, 26, 29, 43, 64) est asservie au moyen d'un commutateur magnétique.

9. Procédé suivant la revendication 8, **caractérisé** en ce qu'une unité (31, 41) centrale de commande de processus reçoit des signaux (M, A) d'ordres déclenchés manuellement et/ou automatiquement pour rendre inerte de façon automatisée le générateur (1), et actionne les électrovannes dans le sens de l'ouverture ou de la fermeture suivant une séquence préprogrammée.

10. Procédé suivant la revendication 8, suivant lequel le générateur (1), pendant son remplissage ou sa vidange et au moyen d'une installation d'alimentation en gaz associée au générateur (1) et comprenant au moins une alimentation (2) en gaz réfrigérant, une alimentation (3) en air comprimé et une alimentation (4) en gaz inerte ainsi que des vannes (13a, 13b, 19, 43, 64) associées à ces alimentations, est rendu inerte par le fait qu'une première sous-commande "remplissage" ou une deuxième sous-commande "vidange" d'une unité (31, 41) centrale de commande de processus est activée, l'unité (31, 41) de commande de processus asservissant alors automatiquement les vannes réalisées sous forme d'électrovannes ou de vannes de régulation et, suivant la sous-commande respectivement activée, les vannes (13a, 13b, 19, 43, 64) étant actionnées suivant une séquence préprogrammée de telle sorte que le gaz réfrigérant contenu dans le générateur (1) est refoulé au moyen d'un gaz inerte introduit par l'alimentation (4) en gaz inerte, et ce gaz inerte est ensuite refoulé par de l'air provenant de l'alimentation en air comprimé ou par du gaz réfrigérant provenant de l'alimentation (2) en gaz réfrigérant, et il est mis fin à la sous-commande activée à la fin de la séquence préprogrammée.

11. Procédé suivant la revendication 10, **caractérisé** en ce que, après l'activation de la sous-commande "remplissage", le générateur (1) est rincé avec le gaz inerte au moyen d'une électrovanne (43) de régulation de l'alimentation (4) en gaz inerte, et un dispositif (76) de mesure de concentration associé au générateur (1) mesure, dans un premier champ de mesure, la concentration de gaz inerte dans l'air du générateur (1) et la transmet à l'unité (41) de commande de processus, et cette dernière met fin à l'opération de rinçage lorsqu'une première valeur (KWS1) prescrite de concentration de consigne est atteinte.

12. Procédé suivant la revendication 11, **caractérisé** en ce que l'unité (41) de commande de processus commute, lorsque la première valeur (KWS1) de concentration de consigne est atteinte, le dispositif (76) de mesure de concentration sur un deuxième champ de mesure pour la concentration de gaz inerte dans le gaz réfrigérant et, au moyen d'une autre électrovanne (65) de régulation, l'opération de rinçage est poursuivie avec rinçage du gaz inerte par du gaz réfrigérant, jusqu'à ce qu'il soit mis fin à cette opération de rinçage lorsqu'une deuxième valeur (KWS2) prescrite de concentration de consigne est atteinte.

13. Procédé suivant la revendication 10, **caractérisé** en ce que, après l'activation de la sous-commande "vidange", le générateur (1) est rincé avec le gaz inerte au moyen de l'électrovanne (43) de régulation de l'alimentation (4) en gaz inerte, et un dispositif (76) de mesure de concentration associé au générateur (1) mesure, dans un premier champ de mesure, la concentration de gaz inerte dans le réfrigérant et la transmet à l'unité (41) de commande de processus, et cette dernière met fin à cette opération de rinçage lorsqu'une valeur (KWS3) prescrite de concentration de consigne est atteinte.

14. Procédé suivant la revendication 13, **caractérisé** en ce que l'unité (41) de commande de processus, à l'atteinte de la valeur (KWS3) prescrite de concentration de consigne , commute le dispositif (76) de mesure de concentration sur un deuxième champ de mesure pour la concentration d'air dans le gaz inerte et, au moyen d'une autre électrovanne (45), l'opération de rinçage est poursuivie avec rinçage du gaz inerte par de l'air, jusqu'à ce qu'il soit mis fin à cette opération de rinçage lorsqu'une valeur (KWS4) prescrite de concentration de consigne est atteinte.

15. Procédé suivant la revendication 10, **caractérisé** en ce qu'un signal (A) d'ordre automatique de vidange est déclenché si au moins un des critères suivants est rempli :
I) la différence de pression entre le gaz réfrigérant et l'huile d'étanchéité du générateur (1) s'abaisse en dessous d'une valeur limite prescrite,
II la pression nominale dans le générateur (1) s'abaisse d'un montant donné pendant un laps de temps préréglable,
III) la concentration de gaz réfrigérant dans l'air dans le générateur (1) s'abaisse en dessous de la concentration naturelle du gaz réfrigérant dans l'air atmosphérique,
IV) un avertisseur (67) d'incendie associé à la centrale électrique signale un incident.

16. Procédé suivant l'une quelconque des revendications 10 à 15,
**caractérisé** en ce que des courbes (68) d'allure dans le temps d'opérations de remplissage et/ou de vidange sont mémorisées dans l'unité (41) de commande de processus, et elles sont comparées aux opérations actuelles de remplissage ou de vidange et, en cas de divergence atteignant une valeur pouvant être prescrite, soit un dispositif (69) d'alerte est déclenché, soit une vanne actuellement actionnée est fermée.

17. Procédé suivant l'une quelconque des revendications 10 à 16, **caractérisé** en ce que l'unité (41) de commande de processus reçoit, par des lignes (50) de signaux, des valeurs de mesure supplémentaires provenant de transducteurs (51 ; 53 ; 53 ; 62 ; 63), notamment de débitmètres (51 ; 52 ; 53) et/ou de capteurs (62 ; 63) de pression, dont l'allure dans le temps est comparée à des valeurs de consigne afin de déceler et de signaler des défaillances.
